# EUROPEAN PATENT APPLICATION

(11) **EP 3 106 011 A1**
(43) Date of publication of application: **21.12.2016**
(21) Application number: 15425046.8
(22) Date of filing: 17.06.2015
(51) Int. Cl.: A01B 73/00

(54) **MACHINE FOR TREATMENT OF AN AGRICULTURAL FIELD**

(71) Applicant: Criscione, Giovanni, 81041 Vitulazio (CE) (IT)
(72) Inventor: Criscione, Giovanni, 81041 Vitulazio (CE) (IT)
(74) Representative: Zizzari, Massimo

(57) **Abstract**

Multifunctional machine for treatment of an agricultural field, preferably able to prepare the soil for the sowing, towed by a tractor, and characterized in that comprising:
- a structure preferably electrically welded and made of section bars preferably made of steel that achieves a frame where additional elements of the same machine are connected;
- a series of working objects composed of a group of treatment tools, fixed all along the length and the width of a rotary horizontal axis, called *rotor,* placed on the lower side of the frame so that said working objects reach the ground;
- a towing bar connected at one end to said frame of the machine by using a proper first connection device and at the other end to a tractor by using a proper second connection device;

wherein the connection of the towing bar to the frame of the machine includes a pivot in order to make the axis to rotate according to its use; in a phase of transportation of the machine on the road the operator arranges the frame so that its longitudinal axis is aligned to the direction of motion, instead during the treatment of field the operator makes the frame to rotate of 90° so that the axis of the same frame results to be perpendicular to the direction of motion; in such a way the treatment of large fields in a short time can be achieved and it is further possible an easy transportation of the machine on the road.

## Description

The present invention is related to a machine for treatment of an agricultural field, useful to provide several types of intervention, and in particular to prepare the soil for the sowing. Said machine is characterized to be multifunctional and can be towed by a tractor on the road and either on an agricultural field.

The ideal soil for agriculture should be be deep, friable, well drained and should have a high quantity of organic substances. The correct preparation of soil represents a good basis for a good germination of seeds and the successive growth of plants. This treatment is able, in fact, to improve the structure of soil and to give the best starting ground for plants. In many cases, a machine like in example the *hoe machine* is still the best machine for treatment of the soil, even in case of parasites, diseases or weed, the *hoe machine* helps to assure the production of soil. In case of a rotary *hoe machine*, that is an agricultural machine used to move the soil and it is necessary to embed the waste from the previous production of plants. In respect to different types of *hoe machines* it works more in surface and, instead of revolving the clods, it crumbles them, reducing the need of a further refining treatment. The power of motion can be given by animals or can be mechanical and, in the latter case, the machines are mounted on tractors, applied to a hydraulic lifter or to a towing hook.

The rotary *hoe machine* is made of a series of small hoes, or knives, jointed to a single horizontal shaft, or rotor, and the rotation of the same activates the knives.

Usually, the machine is activated by the main engine of the tractor, through the cardan joint transmission. The cardan transmission is achieved by means of a cardan joint that is a transmission mean placed between a rotary power shaft and a rotary load shaft. The instantaneous angular speed of the load shaft is not constant during a complete rotation, instead the average angular speeds of the two shafts are approximately the same. This fact causes the transmission of motion to be not smooth and can involve problems, in example, related to vibrations. Other problems occurring during the preparation of soil by a rotary hoe machine are related to the instability of the towed machine, because it works on a soil having stones, weed and other objects that can make the motion going up and down. Furthermore, in order to treat large fields in reasonable time, it is necessary to use large machines that require, to be towed and to move the knives, engines having a significant horse power.

As known from the state of the art, there are some patents disclosing attempts of solutions of the previous technical problems.

The international PCT application WO 2014/108909 A1 (Gohil) that has been published on 17 July 2014 discloses a rotary hoe machine that is connected to a tractor by using a jointing device including three attaching points and a transversal main frame on the front side that moves along the trajectory of the same tractor. Said rotary *hoe machine* is composed of: a transversal main frame, a series of rotating blades placed horizontally all along the width of said transversal frame and attached to the lower side of the frame so that they can reach the soil, and a transversal levelling bar fixed at the rear side of said main frame in order to level the treated soil; a group of cylinders placed at the rear side of said levelling bar, where the cylinders break up the clods remaining after the treatment of soil; the power of tractor is transferred to the rotary hoe machine by using a rotary shaft further connected to some gears enabling the motion of said blades.

The patent US 3429144 A (McIntosh) published on 25 February 1969 discloses a device including a pair of cardan joints, each of them having an arm placed along an opposite direction and having cylindrical opening at the respective ends. Both the joints are connected by a fork. A floating sphere is placed between said pair of joints, used as a device of rotation transmission of a standard double cardan joint. When the sphere rotates, it increases the area of contact with the cardan joints that changes continuously, therefore the wear is minimized; furthermore, the sphere achieves a more smooth transmission of the cardan joints.

The patent EP 2687074 A1 (Pedersen) published on 22 January 2014 discloses a trolley supporting a machine for treatment of an agricultural field towed by a tractor. Said trolley is adjustable for machines having different sizes. The supporting trolley includes a rudder and a traverse connected each other. Said traverse can rotate around the rudder in order to reach a position of work or a position of transportation. Two wheels are connected respectively to the first and second arm of support, and they are further connected to the traverse. Both the arms are able to rotate in respect to two longitudinal axis in order to reach a position of work or a position of transportation.

However, all the present solutions are affected by significant drawbacks:

The international PCT application WO 2014/108909 A1 (Gohil) discloses a *hoe machine* connected to a tractor that provides the driving power, other for motion of said hoe machine, also for motion of said knives placed on the frame; that requires the use of tractors having a significant horse power; the present invention, instead, makes it possible the use of tractors having a lower horse power because the treatment tools are moved by an auxiliary engine placed on the frame of the same machine; the application of said auxiliary engine improves the stability of said machine because there is a better distribution of loads.

The patent US 3429144 A (McIntosh) and other patents related to the cardan group try to find progressive solutions to the problem of vibrations consequent to the transmission of motion; the present invention, instead, does not involve the tractor's engine for motion of the treatment tools, but it involves an auxiliary engine placed directly on the frame of the same machine; that achieves not only to solve the problem of vibrations but makes it possible, as previously stated, to use tractors having a lower horse power because they are used just for the towing operation, leading to advantage of decreasing costs by saving fuel.

The patent EP 2687074 A1 (Pedersen) discloses a trolley supporting the motion of a machine for treatment of an agricultural field, and that requires an additional device that should be attached or removed according to its use; in the same way during the standard use some wheels are available and they are not directly connected to the machine, but they are attached just at the time of transportation on the road; said operations can be often complicated, dangerous for the operators and can introduce waste of time; in the present invention, instead, a machine for treatment of an agricultural field is proposed, having a liftable group of wheels directly applied on the frame, so that the operator lifts the wheels up in order to prepare the work on the soil, or put the wheels down to provide transportation on the road.

Therefore, the main objective of the present invention is to propose a machine for treatment of an agricultural field and that can be towed by a tractor.

Another objective is to propose a machine for treatment of an agricultural field that can be transported either on a field and on the road, according to the position of respective liftable wheels for transportation.

Another objective is to achieve a treatment that requires a lower consumption of fuel and less manpower in order to provide the treatment of soil.

Another further objective is to achieve a machine for treatment of an agricultural field that prepares the soil for the sowing in a shorter time.

An additional other objective is to achieve a machine for treatment of an agricultural field that can be transported using tractors having a lower horse power because the motion of the knives is provided by using an auxiliary engine placed on the frame of the hoe machine.

Another further objective is to achieve a machine for treatment of an agricultural field that maintains its transversal axis perpendicular to the direction of motion of the tractor, in the straight forward paths and in the curved paths, obtaining at the same time a generally stable machine.

Furthermore, another objective is to provide a machine that is easy to be driven and easy to be transported, providing the safety of operators at the same time.

Therefore it is specific subject of the present invention a multifunctional machine for treatment of an agricultural field, preferably able to prepare the soil for the sowing, towed by a tractor, and characterized in that comprising:
- a structure preferably electrically welded and made of section bars preferably made of steel that achieves a frame where additional elements of the same machine are connected;
- a series of working objects composed of a group of treatment tools, fixed all along the length and the width of a rotary horizontal axis, called *rotor*, placed on the lower side of the frame so that said working objects reach the ground;
- a towing bar connected at one end to said frame of the machine by using a proper first connection device and at the other end to a tractor by using a proper second connection device;
wherein the connection of the towing bar to the frame of the machine includes a pivot in order to make the axis to rotate according to its use; in a phase of transportation of the machine on the road the operator arranges the frame so that its longitudinal axis is aligned to the direction of motion, instead during the treatment of field the operator makes the frame to rotate of 90° so that the axis of the same frame results to be perpendicular to the direction of motion; in such a way the treatment of large fields in a short time can be achieved and it is further possible an easy transportation of the machine on the road.

The present invention will now be described for illustrative but not limitative purposes, according to its preferred embodiments, with particular reference to figures of the enclosed drawings, wherein:
Figure 1 is a lateral view of a hoe machine at the moment in which it is transported by a tractor on the road;
Figure 2 is a lateral view of a hoe machine at the moment in which it is transported on an uneven road;
Figure 3 is a top view of a hoe machine at the moment in which it is transported by a tractor on the road;
Figure 4 is a lateral view of a group of wheels used in order to provide transportation of a hoe machine on the road.
Figure 5 is a top view of a group of wheels used in order to provide transportation of a hoe machine on the road.
Figure 6 is a top view of a hydraulic device useful to stop the rotation at the pivot of the towing point.
Figure 7 is a top view of a hoe machine towed by a tractor at the moment of moving in a curve;
Figure 8 is a top view of a connection device to the a tractor;
Figure 9 is a top view of hoe machine towed by a tractor during the phase of treatment of soil;
Figure 10 is a front view of a hoe machine towed by a tractor during the phase of treatment of soil;
Figure 11 is a front view of a particular of an auxiliary engine placed on a frame of a hoe machine in order to provide motion of a group of knives during the phase of treatment of soil;
Figure 12 is a top view of a hoe machine towed by a tractor during the phase of treatment of a soil along three possible directions, that is straight forward or moving to the right or to the left.

It is here underlined that only few of the many conceivable embodiments of the present invention are described, which are just some specific non-limiting examples, having the possibility to describe many other embodiments based on the disclosed technical solutions of the present invention.

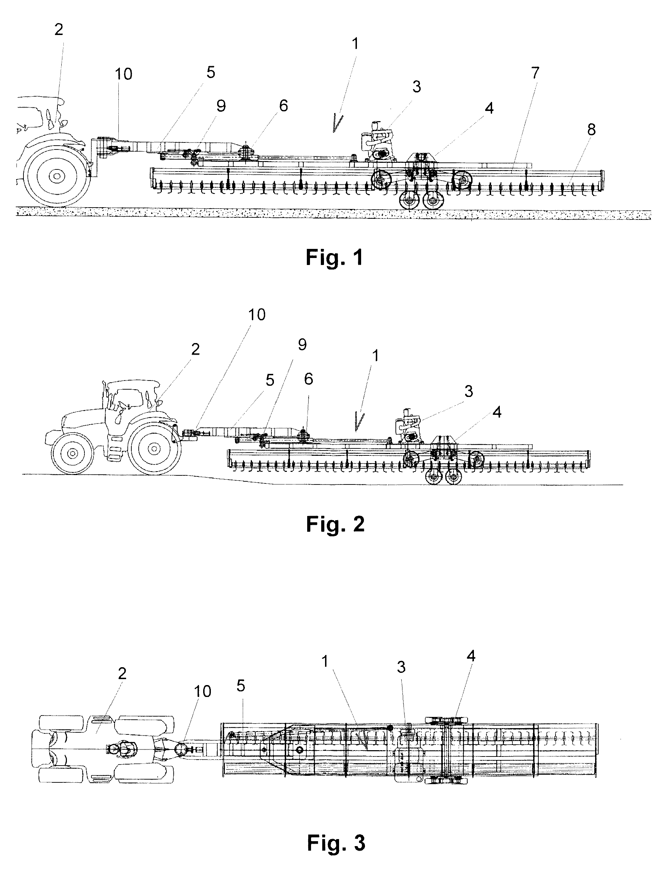

Figure 1 shows a multifunctional machine 1 at the moment of transportation on the road, composed of a frame 7 where a series of working objects 8 are powered by an auxiliary engine 3, and where said machine 1 is towed by using a tractor 2. The machine 1 is connected to the tractor 2 by using a towing bar 5. Said towing bar 5 is jointed at one end to the machine 1 by using a proper first connection device 6 and at the other end connected to the tractor 2 by using a proper second connection device 10. A hydraulic device 9, jointed to the towing bar, is used in order to increase the stability during the transportation on the road. It is shown that the machine 1 includes a group of wheels 4 applied and assembled to said frame 7, having the feature to be lifted up when prepared to the phase of treatment of soil: therefore, the operator put the wheels 4 down during the transportation of machine 1 on the road, and lifts the wheels 4 up during the treatment of soil.

Figure 2 shows a machine 1 at the moment when it is transported on the road by using a tractor 2. This figure shows how the transportation on the road can be achieved even on uneven roads.

Figure 3 shows a top view of the same machine 1 at the moment when it is transported on the road by using a tractor 2. As previously stated, the machine 1 is attached to the tractor 2 by using a towing bar 5. Said bar 5 achieves the transmission of motion from tractor 1 to the machine 1, at the moment of transportation on the road and at the moment of treatment of soil. In particular, during the transportation on the road, a frame 7 of machine 1 is placed aligned to the towing bar 5 with a free joint, instead during the treatment of soil, the frame 7 has been rotated 90° with a fixed joint, so that the two axis, that of the bar 5 and that of machine 1, are perpendicular each other.

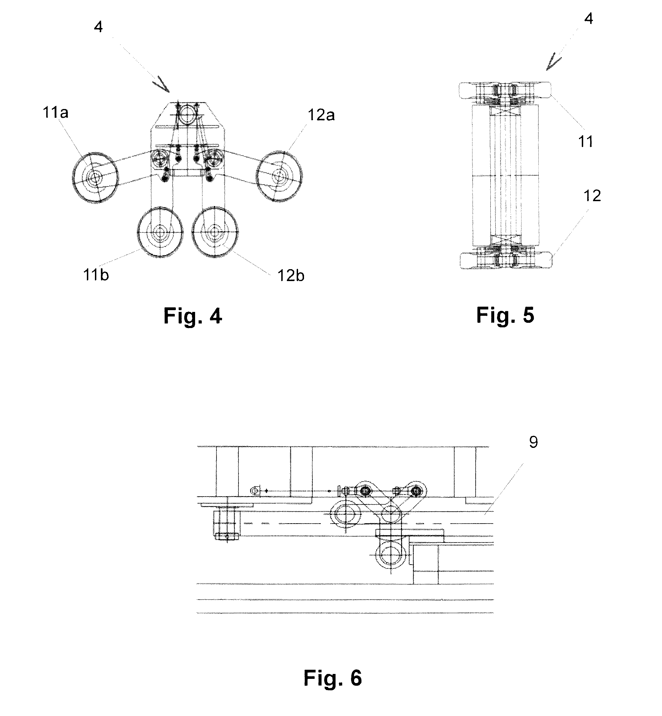

Figure 4 shows a group of wheels 4 used during the transportation of the machine 1 on the road. Figure shows the wheels of said group of wheels 4, in a lifted up position 11 a and 12a, that is when the machine 1 is used for treatment of soil, and in a pushed down position 11b and 12b, that is when the operator should provide transportation of machine 1 on the road.

Figure 5 shows a top view of the same group of wheels 4 as previously stated.

Figure 6 shows a hydraulic device 9, used in order to achieve a better stability of a machine 1, by blocking the point of rotation at the towing bar. Said device includes three points of attachment, where two points are attached to the towing bar 5 and one point is attached to a hydraulic cylinder 14 that is used in order to guarantee the positioning and stability of the machine 1, either during the phase of transportation on the road and at the phase of treatment of soil.

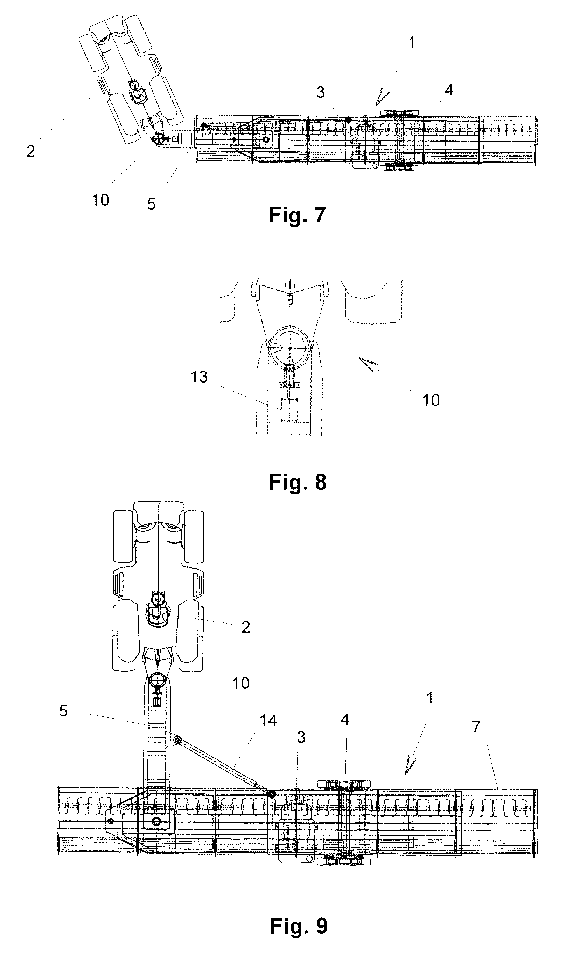

Figure 7 shows a machine towed by a tractor 2 on the road, at the moment when said tractor 2 is going along a curve trajectory. As previously specified, the machine 1 is transported by a tractor 2 that is connected by using a towing bar 5 attached through a second connection device 10. Said device is necessary first of all because it must keep the position constant by changing the power force, then permitting to follow the waved surface of soil, and then to adapt to the depth of treatment of soil. Said features are important in order to guarantee a better safety for operators avoiding to turn the tractor 2 upside down, or avoiding to rise its front part, during treatment of soil. Said second connection device 10 to the tractor 2 permits to said towing bar 5 to keep always a position aligned to the direction of motion of tractor 2, when the tractor 2 is moving straight forward, and to follow the direction of curves, when the same tractor 2 turns right or left.

Figure 8 shows in detail a second connection device 10 to a towing bar 5, as previously described, that includes a device 13 blocking the machine 1 in a working position. When said device 13 is activated achieves to block the second connection 10 to the tractor 2 and therefore to block the towing bar 5. In such a way, the axis of the towing bar 5 results to be aligned to the direction of motion of tractor 2, and then the transversal axis of machine 1 is kept perpendicular to the direction of motion. At the moment when the tractor 2 should follow a curve in order to change direction, the user disables the blocking device 13, making the connection device 10 to be free in respect to the tractor 2. In such a way, the towing bar 5, and consequently the machine 1, should be able to follow the curve trajectory of tractor 2.

Figure 9 shows a machine 1 towed by a tractor 2 during the phase of treatment of soil. At the moment when the treatment of soil should be provided, the operator makes the frame 7 of machine 1 to rotate of 90° so that it is placed perpendicular to the towing bar 5. A hydraulic cylinder 14 is used in order to guarantee positioning and stability of the machine 1, during the phase of treatment of soil, and it is connected at one end to the towing bar 5 and at the other end to the frame 7; in particular, during the treatment of soil the hydraulic cylinder 14 is placed according to a 45° in respect to the axis of said towing bar 5, so that the longitudinal axis of machine 1 is kept perpendicular in respect to the to the axis of said towing bar 5, either when the direction of motion is straight forward and when the tractor 2 follows some curve trajectories. During the phase of transportation on the road, when the machine has been rotated of 90°, the longitudinal axis of the hydraulic cylinder 14 is placed according to a direction aligned to the towing bar 5.

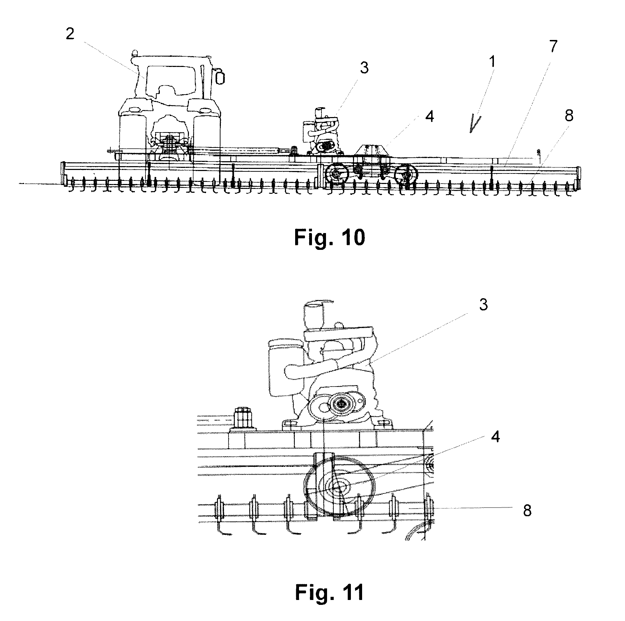

Figure 10 shows a machine 1 towed by a tractor 2 during the phase of treatment of soil. It is seen that the operator arranges the machine 1 so that its transversal axis should be perpendicular to the direction of motion of tractor 2, so that it can be worked on very large agricultural fields. An engine group 3 is placed at the centre of frame 7 of said machine 1, and it is used in order to rotate said working objects 8. Furthermore, as shown in figure, the group of wheels 4 is placed in a configuration of work, that is having lifted the wheels up, in order to make the treatment tools to be inserted deep in the ground for treatment of soil.

Figure 11 shows more in detail the engine group 3 useful to activate the motion of the treatment tools 8. The engine group 3 can be placed according to different directions, like in example shown in figure 10, otherwise having the engine shaft aligned longitudinally to the rotating treatment bar. The motion is transmitted by using proper gears connected to two half-shafts properly placed in order to transfer power force from engine 4 to the treatment tools 8.

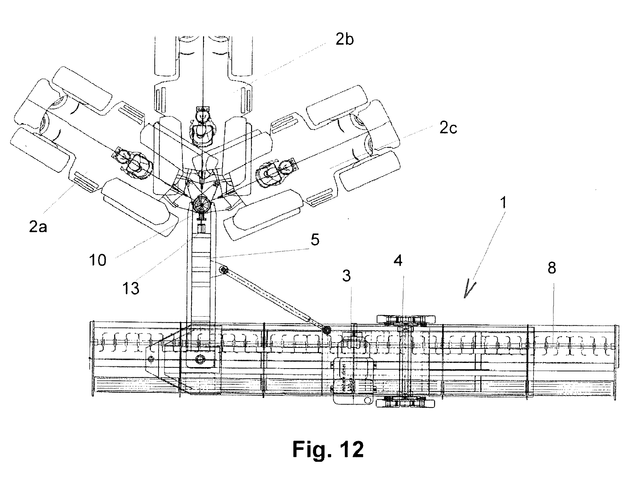

Figure 12 shows a machine 1 attached to a tractor 2 in positions 2a, 2b and 2c, during the phase of treatment of an agricultural soil. In this figure three possible trajectories of motion are represented simultaneously: the position 2b follows a straight forward motion where it is activated a blocking device 13 of a connection device 10 to the tractor 2; the positions 2a and 2c follow a curve motion, respectively to the left and to the right, where it is disactivated the blocking device 13 in order to make it possible to move the towing bar 5, and therefore the machine 1, and follow the direction of motion. It should be remarked that, in such a way, it is possible to follow different directions of trajectories, straight forward or curved, keeping the stability of the machine at the same time.

Therefore, the above examples show that the present invention achieves all the proposed objectives. In particular, it permits to obtain a machine for treatment of an agricultural field and that can be towed by a tractor and can be transported either on a field and on the road, according to the position of respective liftable wheels for transportation.

According to the invention, the treatment requires a lower consumption of fuel and less manpower in order to provide the treatment of soil.

Furthermore, the machine of the invention can be transported using tractors having a lower horse power because the motion of the treatment tools is provided by using an auxiliary engine placed on the frame of the hoe machine.

Then, the invention regards a machine that maintains its transversal axis perpendicular to the direction of motion of the tractor, in the straight forward paths and in the curved paths, obtaining at the same time a generally stable machine.

Furthermore, according to the invention, the machine is easy to be driven and easy to be transported, providing the safety of operators at the same time.

It is here underlined that only few of the many conceivable embodiments of the present invention are described, which are just some specific non-limiting examples, having the possibility to describe many other embodiments based on the disclosed technical solutions of the present invention.

## Claims

1. Multifunctional machine (1) for treatment of an agricultural field, preferably able to prepare the soil for the sowing, towed by a tractor (2) and **characterized in that** comprising:
- a structure preferably electrically welded and made of section bars preferably made of steel that achieves a frame (7) where additional elements of the same machine (1) are connected;
- a series of working objects (8) composed of a group of treatment tools, fixed all along the length and the width of a rotary horizontal axis, called *rotor*, placed on the lower side of the frame (7) so that said working objects reach the ground;
- a towing bar (5) connected at one end to said frame (7) of the machine (1) by using a proper first connection device (6) and at the other end to a tractor (2) by using a proper second connection device (10);
wherein the connection (6) of the towing bar (5) to the frame (7) of the machine (1) includes a pivot in order to make the axis to rotate according to its use; in a phase of transportation of the machine (1) on the road the operator arranges the frame (7) so that its longitudinal axis is aligned to the direction of motion, instead during the treatment of field the operator makes the frame (7) to rotate of 90° so that the axis of the same frame (7) results to be perpendicular to the direction of motion; in such a way the treatment of large fields in a short time can be achieved and it is further possible an easy transportation of the machine on the road.

2. Multifunctional machine (1) for treatment of an agricultural field, preferably able to prepare the soil for the sowing, according to claim 1, towed by a tractor (2) and **characterized in that** comprising:
- an engine group (3) placed at the centre of frame (7) of said machine (1), used in order to rotate said working objects (8); the motion is transmitted by using proper gears connected to two half-shafts properly placed in order to transfer power force from engine (4) to the treatment tools (8).

3. Multifunctional machine (1) for treatment of an agricultural field, preferably able to prepare the soil for the sowing, according to claim 1, towed by a tractor (2) and **characterized in that** comprising:
- a liftable group of wheels (4) directly applied on the frame (7),
so that the operator lifts the wheels (4) up in order to prepare the work on the soil, or put the wheels (4) down to provide transportation on the road.

4. Multifunctional machine (1) for treatment of an agricultural field, preferably able to prepare the soil for the sowing, according to one or more of previous claims, towed by a tractor (2) and **characterized in that** comprising:
- a hydraulic cylinder (14) that is connected at one end to the towing bar (5) and at the other end to the frame (7) of the machine (1),
said hydraulic cylinder (14) keeps the transversal axis of said frame (7) of machine (1) perpendicular to the direction of motion of said tractor (2) and guarantees the stability during the phase of treatment of soil; during the treatment of soil the hydraulic cylinder (14) is placed according to a 45° in respect to the axis of said towing bar (5), so that the longitudinal axis of machine (1) is kept perpendicular in respect to the to the axis of said towing bar (5), either when the direction of motion is straight forward and when the tractor (2) follows some curve trajectories; during the phase of transportation on the road, when the machine (1) has been rotated of 90°, the longitudinal axis of the hydraulic cylinder (14) is placed according to a direction aligned to the towing bar (5).

5. Multifunctional machine (1) for treatment of an agricultural field, preferably able to prepare the soil for the sowing, according to one or more of previous claims, towed by a tractor (2) and **characterized in that** comprising:
- a blocking device (13) for blocking the machine (1) in a working position, that is connected to a second connection (10) to the tractor (2),
so that when said device (13) is activated it blocks the second connection (10) to the tractor (2) and therefore blocks the towing bar (5) aligned to the direction of motion of tractor (2), and then the transversal axis of machine (1) is kept perpendicular to the direction of motion; instead, when the tractor (2) should follow a curve in order to change direction, the blocking device (13) is disables, making the connection device (10) to be free in respect to the tractor (2), in such a way, the towing bar (5), and consequently the machine (1), is able to follow the curve trajectory of tractor (2).

6. Multifunctional machine (1) for treatment of an agricultural field, preferably able to prepare the soil for the sowing, according to one or more of previous claims, towed by a tractor (2) and **characterized in that** comprising:
- a hydraulic device (9), used in order to achieve a better stability of machine (1), by blocking the point of rotation at the towing bar (5),
said device (9) includes three points of attachment, where two points are attached to the towing bar (5) and one point is attached to said hydraulic cylinder (14) that is used in order to guarantee the positioning and stability of the machine (1), either during the phase of transportation on the road and at the phase of treatment of soil.
